(19) **Europäisches Patentamt / European Patent Office / Office européen des brevets**

(11) **EP 2 539 787 B1**

(12) **EUROPEAN PATENT SPECIFICATION**

(45) Date of publication and mention
of the grant of the patent:
**04.06.2014 Bulletin 2014/23**

(51) Int Cl.:
***G05D 1/02*** (2006.01)

(21) Application number: **11708429.3**

(22) Date of filing: **25.02.2011**

(86) International application number:
**PCT/EP2011/052859**

(87) International publication number:
**WO 2011/104369 (01.09.2011 Gazette 2011/35)**

(54) **METHOD AND SYSTEM FOR MOBILITY IN AN URBAN AND EXTRA-URBAN ENVIRONMENT**

VERFAHREN UND VORRICHTUNG ZUR BEWEGLICHKEIT INNERHALB UND AUSSERHALB DER STADT

PROCÉDÉ ET SYSTÈME POUR LA MOBILITÉ DANS UN ENVIRONNEMENT URBAIN ET EXTRA-URBAIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2010 IT MI20100309**

(43) Date of publication of application:
**02.01.2013 Bulletin 2013/01**

(73) Proprietor: **Alta Lab S.r.l.**
**20139 Milano (IT)**

(72) Inventors:
• **BORGHESE, Nunzio Alberto**
**I-20129 Milano (IT)**

• **ROTONDO, Giuseppe**
**I-20090 Pantigliate - Milano (IT)**
• **VENTURINO, Gianfranco**
**I-20159 Milano (IT)**

(74) Representative: **Herrmann, Franz**
**Dendorfer & Herrmann**
**Patentanwälte Partnerschaft**
**Bayerstrasse 3**
**80335 München (DE)**

(56) References cited:
**EP-A1- 1 727 011       US-A- 4 361 202**
**US-A1- 2003 128 135**

**Description**

FIELD OF THE INVENTION

The invention relates to a method for mobility in the urban and extra urban environment, the method comprising:

- providing a road network distributed over the territory;
  and combined of branches, that allow the aligned transit of vehicles, and provided with stations for letting the passengers get in and get out the vehicles, ramifications for the vehicle deviation to a station or to another branch, and inlet ways for the vehicle entrance from a station or from another branch;
- providing a fleet of vehicles destined to the transport of passengers, each equipped with a local control unit allowing at least the functionality of automated navigation across the road network;
- providing a network central control unit, performing the monitoring of the traffic in the road network and of the status of commitment of the vehicles

The invention further relates to a system conceived to perform the method.

BACKGROUND OF THE INVENTION

Such a method and such a system are known from US 4,361,202 A, which proposes a system for the automatic drive of vehicles destined to the transport of passengers, using metal rails as a reference and sensors along the road that allow control of the steering, of the speed and of the route of the vehicle, preventing any potential collision.

The mobility of persons, especially in the urban environment, constitutes a problem of great actuality for its remarkable social and environmental impact, which causes a continuous improvement effort of the scientific community and the political administrations.

The prior art has repeatedly faced such problematic, trying to propose solutions aiming both to the improvement of the existing modalities and to the introduction of more innovative modalities.

Hence a first family of systems may be distinguished that propose to use the same road infrastructure currently destined to the vehicles circulation, typically aiming to optimize the average speed of transit.

Among these systems is also the system described in the above-mentioned US 4,361,202 A.

Patent US 3,529,284 proposes lighting devices indicating to a convoy of vehicles the adequate average speed to get a green cross light at the next intersection.

Patent US 4,220,946 proposes a central unit controlling the traffic of the public vehicles, which interacts with the same and provides light indications aiming to adjust their speed so that the distance between two successive vehicles is optimized.

Patent US 4,972,288 proposes a traffic network without interruptions and intersections, realized by the replication of elementary blocks or rings with one way flow of circulation and with interconnections between them, achievable from the existing urban road network.

Patents US 5,696,503 and 5,801,943 propose a traffic surveillance system based on the identification of the vehicles in transit in a wide district by means of sensors and cameras, and the elaboration finalized to the recognition of the transit time of the vehicles, the state of congestion and the interruptions for accidents, as well as the efficacy of the traffic control means such as cross lights or preferential directions.

Patent US 6,246,956 describes a centralized system for the urban traffic control based on the localization of vehicles in transit in the roads and the dynamic allocation of the transit sections by transferring to the vehicles the speed control necessary to optimize the traffic density and the security of collision prevention.

Patent US 6,577,946 describes a centralized system for the monitoring of the urban traffic based on the localization of the vehicles by the mobile telephones network and the simulation of the state of congestion of the roads.

US 7,098,806 B2 and US 2003/0128135 A1, describe centralized systems for the urban traffic control capable of remote controlling of the traffic control means (such as for example cross lights), of localizing the vehicles in transit and providing the same with information about the state of the traffic and the suggested itinerary.

We may then distinguish a second family of systems proposed by the prior art that utilize drastically innovated typologies of road infrastructures destined to the vehicles circulation

For example patent US 3,541,962 describes a surface transport system based on elevated rails and passenger vehicles driven by ropes, with inlet and outlet stations placed at the intersection nodes.

US 2007/0189851 A1 describes an urban circulation network on two levels, one at ground level for the vehicles and one elevated for the pedestrians, where the traffic network is composed of one way multi-lane roads and minor interconnecting roads.

We finally highlight those patents describing technologies aiming at the identification of objects in movement.

For example patent US 6,049,619 describes a method based on the elaboration of a sequence of bidimensional images to identify and track the movement of tridimensional objects, which has been further developed leading to the method described in WO 99/59100 A1.

Such technology is nowadays available on high class automobiles as a system for the support and control against potential collision with other vehicles or pedestrians, and is described in WO 2005/098782 A1.

It appears evident from what above described that the prior art has in most part aimed to regulate and optimize in a variety of ways the traffic in the current urban infrastructures, without addressing the issue of minimizing the occupied space in relation with the amount of vehicles in circulation and the space available for the circulation.

It also appears evident that the prior art has often privileged centralized traffic control systems based on the localization of the vehicles in transit and the regulating intervention of the traffic control means (such as cross lights and traffic channeling).

In some cases the prior art has proposed automated systems for the vehicles drive and channeled routes without intersections to favor a continuous flow with optimized average speed.

The prior art has anyway failed to propose a global solution for the public transport that from one side results largely advantageous for the users compared to the private transport means, and from the other side results economical for its realization and maintenance by the interested public authorities.

SUMMARY OF THE INVENTION

Proceeding from this related art, the present invention seeks to provide a method and a system for mobility in an urban and extra-urban environment with optimized transit time and occupied space in the relation to the vehicles in circulation.

This object is achieved by a method having the features of the independent claim. Advantageous embodiments and refinements are specified in claims dependent thereon.

The method for the public persons mobility utilizes: a road network dedicated to the movement of vehicles; a fleet of vehicles each equipped with a local control unit that allows the automated navigation of the same vehicles through the network; a network central control unit that performs the continually updated monitoring of the status of the traffic on the network and provides such information to the vehicles by bidirectional communication with the vehicles local control unit.

The present invention is therefore based on a dedicated infrastructure for the public transport that utilizes a method for the automated navigation and routing of vehicles, adopting a decentralized method for the handling of queues and the identification of the optimal path.

The transit time and occupied space in the relation to the vehicles in circulation is in particular optimized by adapting the network central control unit for the automatic distribution of the unused vehicles in the stations in function of the user received and foreseen reservations.

For the purpose of achieving the above-described object of making the public transport advantageous respect to the private transport, the latter being the cause of the major problems associated with the mobility especially in the urban environment, the present invention provides first of all those performances that nowadays make the private transport preferable, among which for example the easy access to the transport network thanks to the capillarity of stations, the easy point to point connection, the punctual availability of vehicles in the station at any time of day and night. Furthermore, thanks to the advanced drive automation, it offers substantial incremental advantages, such as for example the reduced time to destination and the availability of the travel time, free from the engagement in the vehicle drive, for more productive activity of study or work, with facility of connection to the mobile or web network, or of other desired activity anyway favoring an improved quality of life.

For the purpose of achieving the above described object of making the application of the present invention of easy and economic implementation by the entitled administrations, the road network of the present invention is apt to be integrated in a flexible way and with moderate cost in the present urban infrastructures, for example by conveniently choosing in relation with the different environmental situations between elevated, surface or underground paths. Furthermore the high level of automation, both at level of the vehicle local control unit and at level of the network central control unit, allows the reduction of the costs associated with the drive and control staff and a facilitated planning of the preventive and corrective maintenance on the vehicles and on the network.

For the purpose of achieving the above described object of minimizing the environmental impact, the present invention preferably utilizes vehicles on tires with propulsion systems electrically powered by means of rechargeable batteries, and with ease of recharge by solar collectors or electric sockets distributed along the network; furthermore it allows a significant energy saving by the drive automation, for example by reducing the traveling times and by maintaining a stable cruise speed with reduction of accelerations and decelerations.

For the purpose of achieving the above described object of ensuring a high level of security and continuity of operation, the present invention is based on an elevated automation of the vehicle local control unit and the network central control unit, for example by utilizing: technique for navigation and collision prevention based on multiple sensors and the relevant signal acquisition and elaboration, or based on the vehicle-vehicle or vehicle-network communication; decentralized technique for the vehicles routing, so avoiding the criticality and complexity (as well as costs) associated with a centralized system managing the all fleet of vehicles; self-diagnosis technique aimed at failure prevention of the vehicles and the network, and at scheduling the preventive maintenance programs of the same.

For the purpose of achieving the above described object of minimizing the impact on the territory, the present invention is based on a road network made of a compact size, for example by a reduced size of the vehicles and consequently a reduced width of the network branches dimensioned for a one way transit of aligned vehicles. Furthermore, as already mentioned above, the network branches can be conveniently camouflaged in the urban context, wherever possible, by means of underground or aerial paths.

BRIEF DESCRIPTION OF THE DRAWINGS

Further advantages and properties of the present invention are disclosed in the following description, in which exemplary embodiments of the present invention are explained in detail based on the drawings:

Figure 1    illustrates the basic road network elements, among which the main branch, the deviation to another branch, the inlet from another branch, the station, the outlet to a station, the inlet from a station;

Figure 2    illustrates an example of urban network having a structure with blocks, with one way back and forth paths alternate on pairs of parallel adjacent branches, and interconnections also alternate on pairs of transversal adjacent branches;

Figure 3A    illustrates an example of urban network having a structure with rings, with one way back and forth paths alternate on pairs of adjacent rings, and interconnections also alternate on pairs of adjacent radial lanes;

Figure 3B    illustrates an example of urban network having a structure with rings, with one way back and forth paths alternate on pairs of adjacent radial lanes, and interconnections also alternate on pairs of adjacent partial rings;

Figure 4    depicts the interaction between a central control unit and a fleet of vehicles;

Figure 5    illustrates the situation where a vehicle is entering the main branch, requiring adjustment of the distance between vehicles already in transit on the main branch in proximity of the inlet;

Figure 6    illustrates a station where the parking slots are configured in series, and the vehicles coming from the main branch enter from the station inlet and exit from the station outlet according to a FIFO modality; and

Figure 7    illustrates a station where the parking slots are configured in parallel and the vehicles coming from the main branch enter from the station inlet and exit from the station outlet according to a priority rule.

DETAILED DESCRIPTION OF THE INVENTION

According to a preferred embodiment, the present invention is based on a road network for the public transport constituted by one way branches destined to the transit of aligned vehicles.

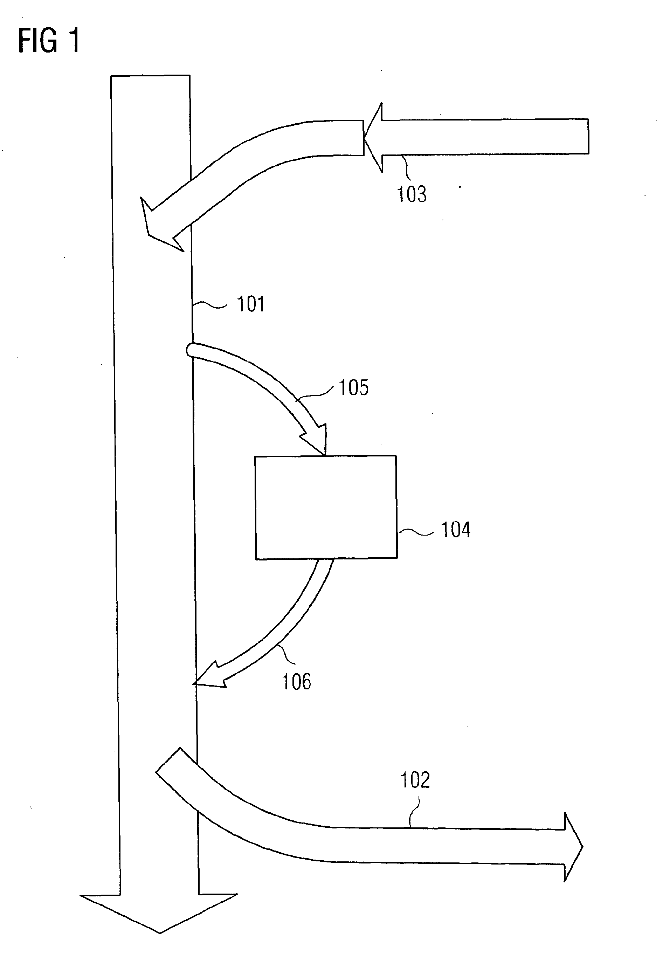

Referring to Figure 1, the elements constituting the road network are the branch 101, the deviation 102, the inlet from another branch 103, the station 104, and the outlet to the station 105, the inlet from the station 106.

The network extends over the territory adapting the existing structures and providing an adequate amount of branches and stations for the passengers intake and outtake, in order to be accessible by any user with minimum walk path. For example the stations may be placed at any block, with distance between them not greater than a few hundred meters. In this way it will contribute to achieve the already expressed object of making the public transport advantageous versus the private transport, facilitating the rapid access to the stations and the point to point mobility.

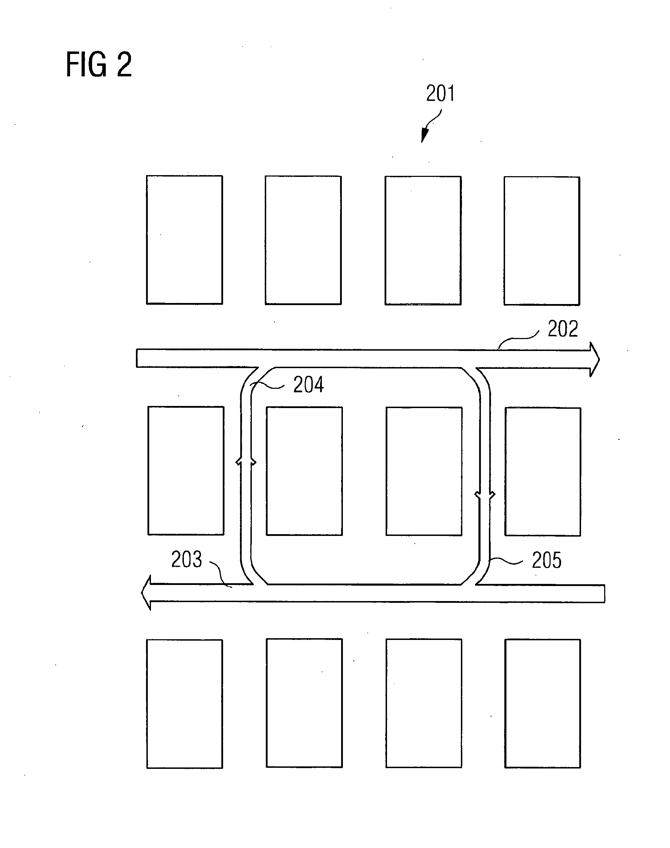

In the case of a road network 201 of an urban structure with blocks as represented in Figure 2 (typical in example of the "castrum romanum", or the north American urban roads), the one way branches can be with forward directions 202 and backwards directions 203 on pairs of parallel adjacent roads, and with connecting branches 204 and 205 also alternate on pairs of transversal adjacent roads.

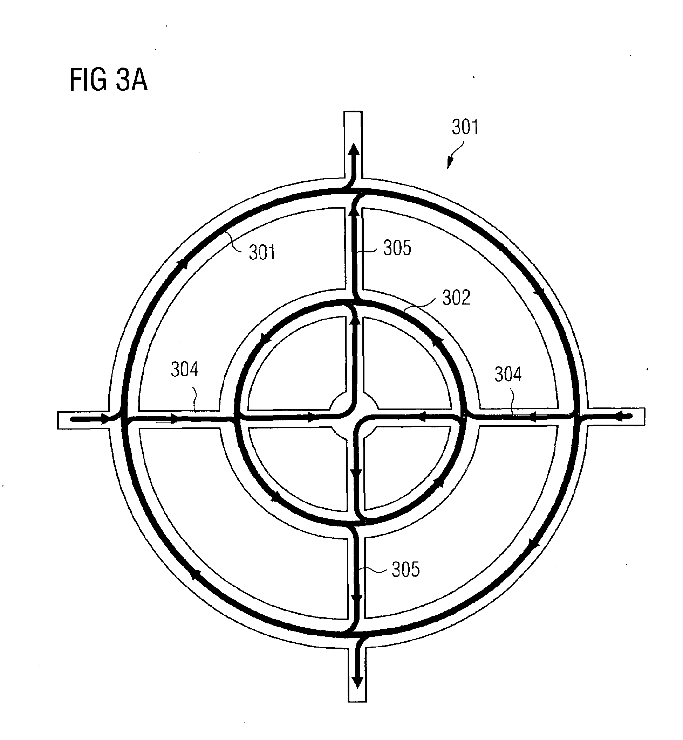

In the case of a road network 301 of an urban structure with rings as represented in Figure 3A (typical in example of a town like Milan), the one way branches can be with forward directions 302 and backwards directions 303 on pairs of adjacent rings, and with connecting branches 304 and 305 also alternate on pairs of adjacent radial roads.

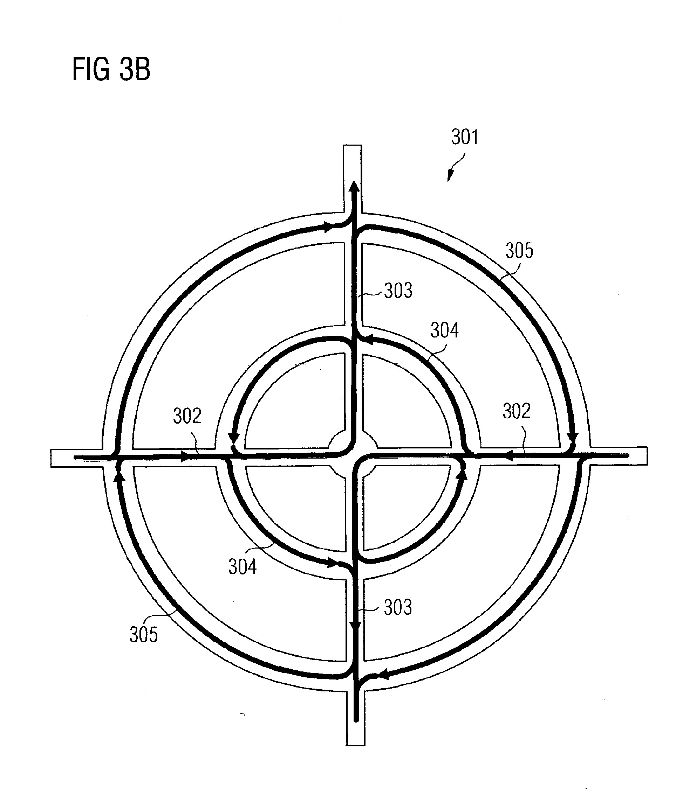

In the case of an urban structure with rings as represented in Figure 3B, the one way branches can be with forward directions 302 and backwards directions 303 on pairs of adjacent radial roads, and with connecting branches 304 and 305 also alternate on pairs of adjacent ring roads.

Of course it is possible to imagine mixed road configurations, derived from those above or anyway however arranged in order to cover with capillarity of stations the entire urban and extra urban territory.

With such network arrangements it will be possible for every user to get in proximity of a desired destination, following an optimized path through the main and connecting branches.

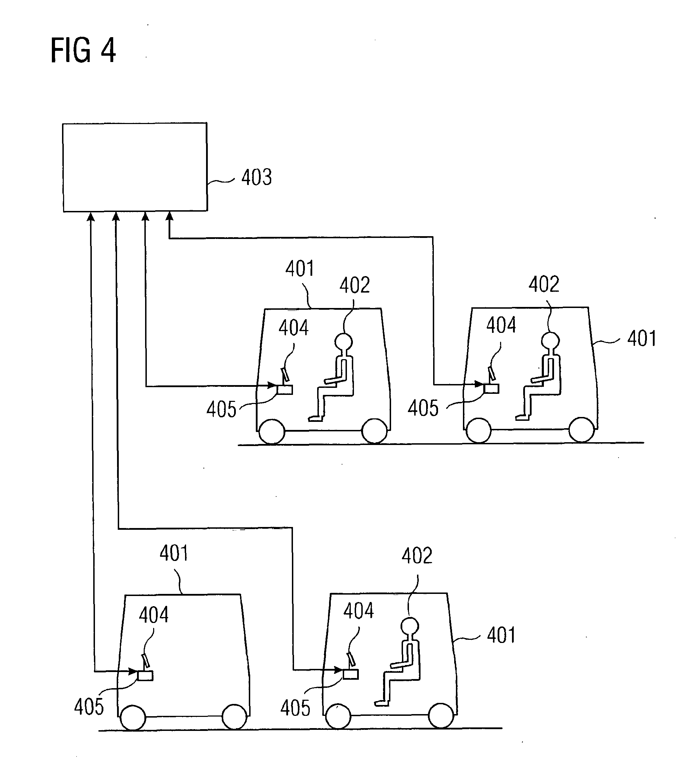

According to Figure 4 a fleet of vehicles 401 is provided, destined to the transport of passengers 402 through the network branches.

An important aspect is the dimensions of the vehicles 401. A compact size is preferable, to offer those characteristics of privacy typical of the private transport, but at the same time to minimize the encumbrance of the public space by the transport infrastructure.

The preferred configuration is by single or dual passenger vehicles 401, that however offer comfort and flexibility of use during the travel, having the possibility for example of extracting a desktop in case it is desired to perform activity with the computer.

Such vehicles 401 can have a limited width, for example less than 1.5 meter, so allowing a reduced width of the network branches too, for example less than 2.5 meters, as required for the object of minimizing the impact on the territory.

The vehicles 401 must among others have the possibility to accommodate at least one handicapped passenger, allowing in example an easy access by a disabled wheel chair.

Furthermore it is not excluded the possibility to access the public network with homologated private vehicles 401, having performance compatible with the public vehicles 401.

It is clearly also possible to foresee vehicles of greater dimensions, possibly developed in length instead of width, capable to accommodate for example 4 or 8 passengers, so allowing group activities as well during the travel. In such case the network branches width may need to be adequately enlarged, in proportion to the greater vehicle dimensions.

Having defined and adopted a compact vehicles size, especially in width, it is hence also possible to define a maximum width of the public network branches, as well as a minimum curvature radius necessary in the curved paths.

The advantageous reduction of the width of the network branches so achieved allows in turn to achieve the object of minimizing the impact on the territory and therefore the encumbrance of the public space, that can be conveniently destined to the use by the pedestrian or bicycle traffic, without however excluding the possibility of utilizing the existing road infrastructure also by a residual minority of private vehicles, eventually subjected to a cost charge as often applied by the municipal administrations.

The above described network results therefore in a structure constituted by branches with reduced width that pass close to stations, connecting to them by inlet and outlet ways.

Along the path the branches never meet intersections, but only ramifications for the path deviations or for the inlet into a station, or inlets from other branches or from a station.

Thanks to the compact dimensions of the network branches, made possible by the reduced width of the vehicles 401, the network branches can easily camouflaged in the urban context, by means of ground level protected roads, or by elevated ways, or by underground tunnels. In this way it also results reduced the investment necessary to realize the network roads and the associated infrastructure.

To achieve the object that the public transport advantageously compares with the private transport it is in first necessary that the vehicle 401 is available with minimum wait time in a station close to the place of departure, and it can get in proximity of the place of destination with minimum time of travel.

The generic user has therefore the first need that the vehicle 401 is available in the desired station at the desired time. According to the preferred embodiment of the present invention it is realized by means of an intelligent central control unit 403 for the centralized management of the unused vehicles 401. The central control unit 403 can for example collect the user's reservations dispatched in a number of ways among which by internet, mobile phone, or by telephone helpdesk, and of course also by request control buttons placed at any station.

The central control unit 403 can also utilize predictive strategies based on statistic elaboration of the historical hours and frequencies of use, distributing in an automatic way the unused vehicles 401 to the various stations in amount proportioned to the expected commitments.

In particular for this purpose standard solutions as provided by the literature can be adopted (M. Pinedo, Scheduling: Theory. Algorithms and Systems, Prentice Hall, 1995) as well as more innovative solutions, inspired to the social behavior of insects, that offer an increased efficiency and flexibility (M. Dorigo, "ant colony optimization" metaheuristic, 2004).

In case of reservation the vehicles 401 can arrive in the station at the requested time and park there, remaining available for the requesting user only for a limited amount of time.

They shall not impede the movement of the other vehicles 401 and, when necessary, adopt adequate strategy to free the path, such as for example cycling around its parking position.

The "reserved" status can be made recognizable for the users through adequate visual indications, and interlocks can be activated preventing the abuse by unauthorized users.

The vehicle 401 can also be made recognizable for the reserving user, for example by means of an indication of the reservation code. Differently, the reserved vehicle 401 can simply become available to the any user having a valid reservation, that has for example inserted an electronic card or exposed an electronic key with radio identification (RFID).

Once accommodated in the vehicle 401, the generic user has then the next need of selecting the desired place of destination.

According to the present invention, it can be realized in a variety of ways, among which for example alphanumeric or numeric keyboard selection, localization on a video map, or vocal control on provided by a user interface 404.

The so selected destination is acquired by a vehicle local control unit 405, with reference to known map of the network and the stations, and is elaborated in order to define the optimal path to destination.

According to the present invention the calculation of the optimal path to destination is preferably developed by an iterative process, for example by optimization of the calculated path travel time based on updated information on the status of congestion and average speed on the branches of the network acquired by means of communication with the network central control unit 403.

In the analysis of such a problem the entire network can be seen as an oriented graph; the user defines the location of destination that constitutes a destination node of the graph, while the start location constitutes the departure node of the graph. At this point it is possible to define the overall optimal path of the vehicle in function of various parameters, among which the total travel time, the residual capacity of the various partial paths (the graph arches) and so on. For this purpose in example classical theories for graph optimization based on dynamic programming can be used (Bertsekas, Dynamic Programming and Optimal Control, Vol.2, 2007; Y. Boykov, V. Kolinogorov, IEEE Transactions on Pattern Analysis and Machine Intelligence, vol. 26, no. 9, pp. 1124-1137, Sept. 2004).

A significant advantage of the present invention is that of allowing, thanks to the available information about the actual traffic on each branch, the adaptation of the calculated path in order to deviate in alternative less engaged branches, where an increased cruise speed is hence possible.

In facts the calculation of the optimal path can not only be performed before the start of the vehicle 401, but also repeatedly proposed at adequate frequency, or for example in proximity of any ramification, in order to take in due account the evolution of the traffic congestion in the network, and therefore answer to the already expressed objects: of making the public transport advantageous versus the private transport by the minimization of the travel time; and of ensuring the continuity of the service also by the minimization of the congestion and the adaptability to the dynamic scenario of the traffic.

Once the optima path is elaborated, the vehicle local control unit 405 can communicate to the passenger 402 its own status of ready, again in a variety of modalities, among which for example by video message or symbol prompt, by lamps or indicating devices, or by voice synthesis. It is also foreseen the possibility for the user to supply the information about the desired destination at the moment of reservation, in order to find the vehicle 401 already prepared with the optimal path calculated at the moment of the access.

In response to the status of ready of the vehicle 401, the user shall then give the start command, to start the phase of automatic navigation of the same vehicle 401 through the network up to the desired station of destination, by a variety of means, among which for example by keyboard selection, by acting on a start control or by vocal control.

From this moment onwards the passenger does not need to interact with the vehicle local control unit 405 anymore, exception made in cases of need where the passenger wants to impart an emergency control such as for example a stop at the closest station or at an emergency parking slot displaced along the network, or he wants to select a change of destination by any of the control means already above described.

Once the navigation is started, the vehicle 401 shall autonomously proceed to the station out way and inlet into the network branch, particularly avoiding any collision with the other vehicles in the station.

According to the preferred embodiment of the present invention the anti-collision system can utilize a variety of technologies and sensors, among which for example electro acoustic devices, or electromagnetic devices (such as radar or LASER), or devices based on images and their elaboration and analysis.

The same technologies may be utilized to ensure a stable movement of the vehicle aligned within the predefined lanes (the branches of the traffic network), possibly adopting passive systems for the reflection of active waves generated by the vehicle 401, to minimize the infrastructure costs. For example a system may be utilized consisting of a laser beam and a photo detector oriented at a certain angle with reflecting strips posed on the sides of the traffic lane. The vehicle 401 will is aligned within the lane when the reflected light beam falls onto the photo detector. To avoid calibration problems it is possible to use an array of lasers and photo detectors, and consider the centering calibration optimized when the number of captured reflections is maximized.

In general the anti-collision system shall always guarantee the maintenance of a safety distance with respect to the preceding vehicle 401, calculated in function of the actual speed. This can be achieved in a variety of ways:

In a first group of methods, every vehicle 401 is capable of autonomously identify the actual distance with respect to a preceding vehicle 401, without need of communicating with the same. Such methods may for example utilize pattern recognition systems through the processing and analyzing of bidimensional images and adjusting the vehicle speed in function of the distance from a recognized preceding vehicle 401 or in function of the identified length of the available lane portion void of vehicles 401 or obstacles.

These methods can also utilize acoustic or electromagnetic signals emitted with adequate frequency from the following vehicle 401 and reflected from the preceding vehicle 401, or emitted from the preceding vehicle 401 and received from the following vehicle 401. The latter signals may also contain a coding rule suitable for identifying the preceding vehicle 401 and its position and speed. These methods may finally utilize a combination of these approaches, to achieve redundancy of information and increase of safety.

In a second group of methods, every vehicle 401 is capable of identifying the distance versus a preceding vehicle 401 by communication with the same.

Such methods can for example utilize systems by which every vehicle 401 is capable of localizing its position in the network and communicating to the other vehicles 401.

Those systems can for example be based on the recognition of adequate markers placed along the network, allowing identification of the branch and the corresponding fraction of branch; such recognition can occur again by the elaboration and analysis of bidimensional images, or by the emission of acoustic and electromagnetic signals from the vehicle 401 and the analysis of the corresponding reflections. The markers can be reflecting or transmitting elements, active or preferably passive, adequately displaced along the network branches to allow acquisition of position and speed information with sufficient accuracy and resolution.

For example a dotted line along every branch associated to a marker at the beginning of the lane, can allow every vehicle 401 in transit to count the dots and to determine with sufficient accuracy its current position and speed in the network and along the branch.

Alternatively the vehicles 401 can be equipped with a system for radio localization based on triangulation, for example between satellite references (GPS), or between references of the mobile telephone network, or between other proprietary references in the infrastructure, or based on the communication with active devices along the infrastructure.

Once obtained its localization, every vehicle 401 is capable of communicating with the other vehicles 401, updating its coordinates with a frequency useful to guarantee the prompt speed correction by the other vehicles 401 in any circumstances, including that of sudden and undesired braking or stop.

Such communication can be at short distance, hence interesting only for vehicles 401 in transit in the proximity. Otherwise it can be at long distance, hence accessible to the entire vehicles fleet; this can happen for example by managing a data base of the vehicles 401 in circulation continually updated by the same vehicles 401 through a wireless network and shared with the other vehicles 401 that have the possibility to access the data base by focused interrogations for example about the number, position and speed of the vehicles 401 which are engaging a certain branch of the network.

Naturally the updating of the above data base can also automatically occur by means of the identification and detection of position and speed of every vehicle 401 through a network of sensors displaced along each branch of the traffic network and communication with the central unit controlling the data base update.

It can also be conceived a more local solution where a sensor device displaced along the branch recognizes the transit of a vehicle 401 and communicates at short distance with surrounding devices, which in turn will inform the succeeding vehicle 401 in transit about the position and speed of the preceding vehicle 401. The communication between sensors and to/from the vehicles 401 can for example occur through cabled lines, or by radio frequency, or by optical or acoustic lines, utilizing for increased safety protocols with coding, cryptography or redundancy.

By the various methods above described, every vehicle 401 is therefore able to acquire the position and speed of the surrounding vehicles 401 and, based on the knowledge of the network map, of its own position and speed, and those of the surrounding vehicles 401, can identify the preceding vehicle 401 on its path and adopt the optimal strategy to guarantee the maximum travel speed while observing a safety distance compatible with its own speed and that of the preceding vehicle 401.

During the navigation along the network an important issue is constituted by the inlet of a vehicle 401 in a branch of the traffic network. This can happen in proximity of a station, or also in proximity of the interconnection between two main branches.

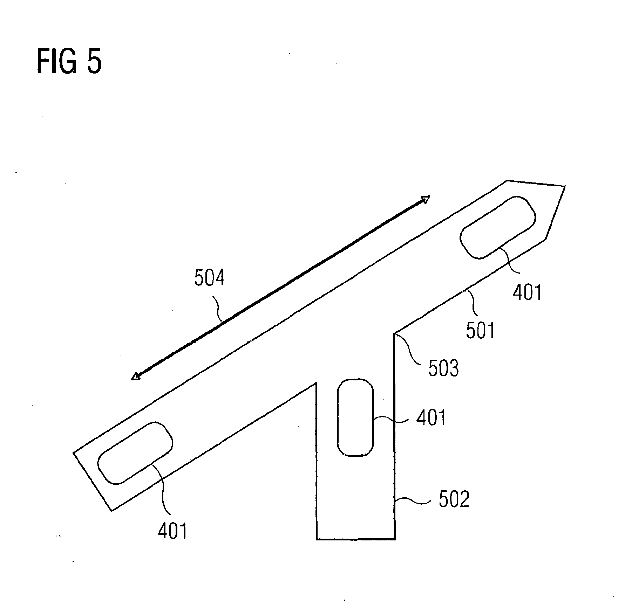

Figure 5 shows in an exemplary manner a situation, in which vehicles 401 travel on a main branch 501, which merges with an inlet way 502.

In such a case it is important to synchronize the inlet of a vehicle 401 with the transit on the main branch 501 of other vehicles 401 in proximity of the inlet way 502.

According to the present invention the speed control automatism shall allow a maximum inlet speed compatible with the necessary safety distance from the vehicles 401 in transit on the main branch 501, and shall anyway apply an alternate priority rule allowing alternate transit of a vehicle 401 in the main branch 501 and a vehicle 401 in an inlet way 502.

For example it is assumed, as mentioned above, that every vehicle 401 knows the position and speed of the surrounding vehicles 401, by means of any of the methods above already indicated, and that the vehicles 401 can communicate among each other reciprocally granting the above mentioned alternate priority rule.

In case of a vehicle 401 in transit on the main branch 501 and proximal to an inlet point 503, the vehicle 401 on the inlet way 502 shall adjust its speed and acceleration so that it will reach the inlet point 503 with the same speed as the vehicle 401 on the main branch 501, but with sufficient distance from the same.

In case of two vehicles 401 in transit in the main branch, the following vehicle 401 shall slow down up to have at least a double safety distance from the preceding vehicle 401, to allow the safe entrance of the inletting vehicle 401.

In this way in case of intense traffic the vehicles 401 automatically adjust their speed in order to ensure the alternate inlet of new vehicles 401 in the main branch 501.

It can be foreseen that in case of maximum traffic in the network the vehicles 401 proceed at constant speed v maintaining between each other at least a double safety distance $\Delta s$ approximately calculated by the following formula where g is the gravity acceleration and k is the friction coefficient:

$$\Delta s = v^2 / (2 \cdot g \cdot k) = \text{approx } v^2 / 10$$

For every branch it is therefore possible to calculate the maximum allowed speed in function of its length and the amount of engaging vehicles 401.

For example in a branch of one kilometer engaged by 50 vehicles 401 having 20 m distance between each other, to maintain at least a double safety distance the following speed is allowed

$$2\Delta s = 1000 / 50 = 20 = 2v^2 / 10$$

$$v^2 = 100 \text{ , } v = 10 \text{ m/s} = 36 \text{ km/h}$$

Such speed can allow the ordered and safe inlet of new vehicles 401 in the main branch 501, with alternate priority versus the vehicles 401 already in transit in the same.

Referring to Figure 5, it is clear that the inlet of a new vehicle in the above conditions causes a reduction of the distance between vehicles in the main branch 501 in proximity of the inlet way 502. It results in particular that the distance 504 between vehicles 401 is reduced by one time the safety distance due to the inlet of the vehicle 401 traveling on the inlet way 502.

Therefore an approach can be envisaged aiming to recover in the shortest possible time a double safety distance, among which slowing down of the vehicle 401 coming from the inlet way 502 and of the vehicle 401 following the vehicle coming from the inlet way 502 after the inlet of vehicle 401 coming from the inlet way 502, or slowing down of the 401 before the inlet point 503 prior to the inlet of vehicle 401 on the inlet way 502.

Clearly, in an approach aiming to an increased or a reduced safety, respectively in favor or not in favor of the travel time, a minimum distances equal to whatever multiple of a safety distance can be adopted.

During the above described situations the accelerations and decelerations imposed by the vehicle local control unit 405 can be annoying, and can therefore be moderated by means of appropriate algorithms for their harmonization.

Once completed the path, the vehicle 401 enters in the destination station, going to occupy a parking slot there available. The vehicle local control unit 405 then awaits the exit of the passenger, identified by a variety of means among which for example video surveillance, signal acquisition from pressure or thermal sensors, or from electromagnetic devices for the remote recognition, or electronic key with radio controlled identification (RFID), or a combination of the same.

According to the present invention the stations can have different configurations, among which for example:

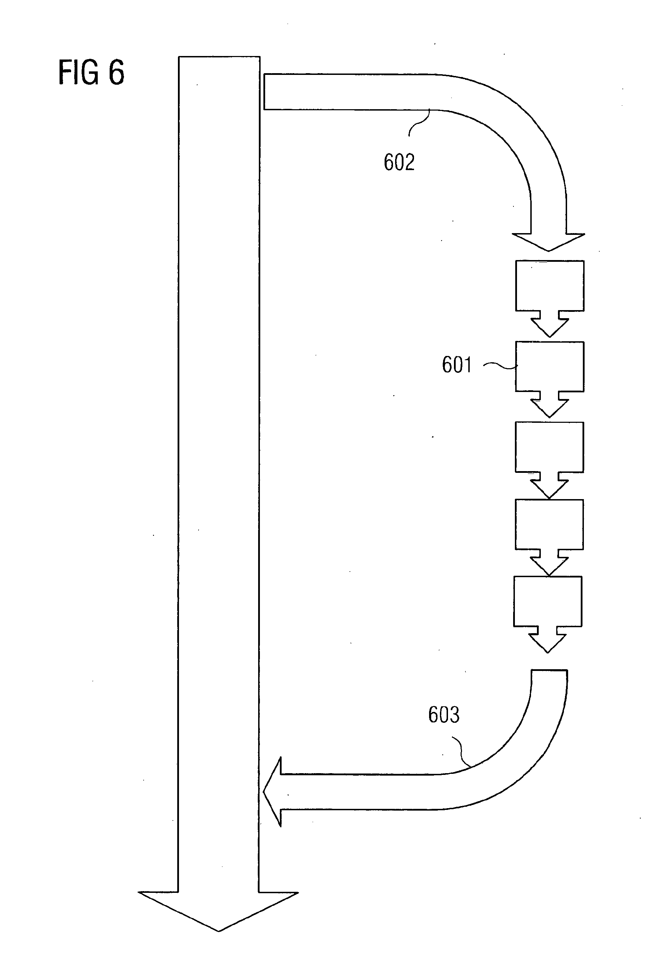

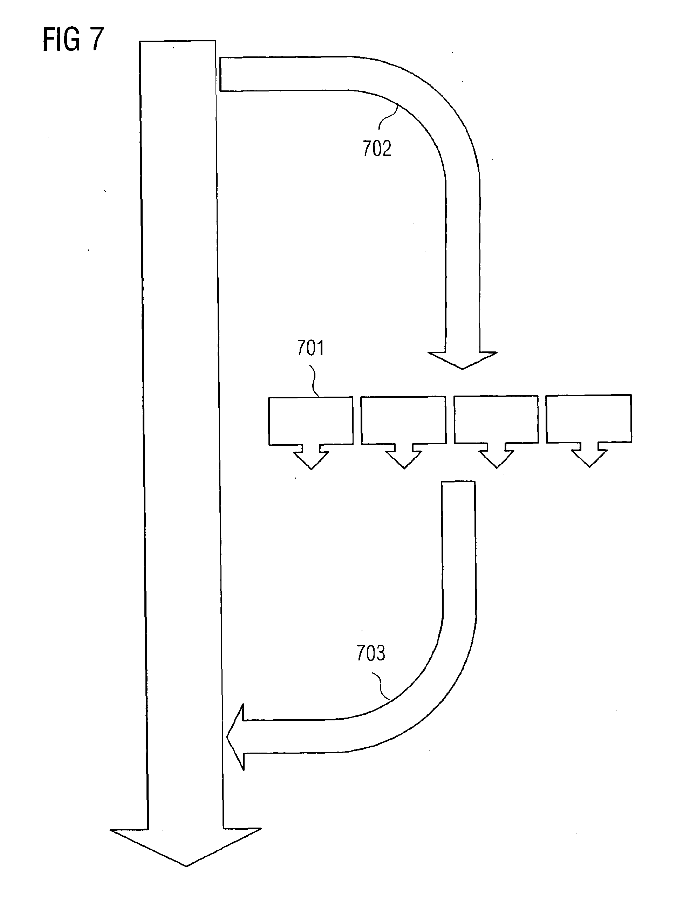

- configuration in series, as represented in Figure 6, where the vehicles parking slots 601 are queued each other, and the vehicles 401 coming from the station inlet way 602 proceed in a FIFO (First In First Out) mode through the parking slots and to the station outlet way 603;
- configuration in parallel as represented in Figure 7, where the vehicles parking slots 701 are flanked each other, and the vehicles coming from the station inlet way 702 proceed through the parking slots and then to the station outlet way 703 according to appropriate predefined rules;
- configuration mixed, combination of the two above, where for example more series slots are flanked together, and the vehicles 401 can shift through the series slots and the last can proceed to the way for inlet into the network according to appropriate predefined rule.

In general the vehicles 401 in the station must be able to communicate with each other and request, once the passenger has given the start, the engagement of the inlet way, obtaining the acknowledge from the other parking vehicles 401.

In case of simultaneous inlet requests, various priority rules may be applied among which in function of the parking position, or in function of a declared urgency by the passenger, or more.

Furthermore methods are needed to allow to the vehicles 401 in start the recognition of the movement of other vehicles 401 in the station.

According to the present invention such methods can be based on systems of communication between vehicles 401 or towards the network, preferably by means of wireless technology. Alternatively, or in a complementary way for redundancy, they can be based on systems for the autonomous recognition by every vehicle 401 of the state of movement of the surrounding vehicles 401, by means of a variety of technologies and sensors, among which for example acoustic or electromagnetic devices (such as RADAR or LASER), or devices based on images and their elaboration and analysis.

Also the problem of a particular congestion exists that may arise in proximity of locations with centralization of the public, such as railway and underground stations, exhibitions, stadiums, and more.

In such locations the stations shall be multiplied as much as possible, and they can have ways for inlet in the network branched radially in multiple directions, to offer multiple ways for the decongestion of the traffic that would arise particularly during the peak times.

There is also the problem of battery recharge, in case of battery powered electric vehicles 401.

The batteries can conveniently be recharged in the same parking slots, by means of connections to the mains supply, or to photovoltaic panels, or mixed.

They can also be recharged in dedicated locations displaced at appropriate intervals along the network, or in the stations, where the vehicle 401 can access to the power source for example by means of automatic connections realized with articulated or telescopic arms.

The networks depicted in Figure 3A and 3B are free of intersections of the branches 101. If the network must be provided with such intersections, the intersections can be equipped with automatic control units allowing the alternating passage of the vehicles 401 arriving from different directions.

The method and the system described herein are based on the availability of a road network dedicated to the automated movement of vehicles which are equipped with a local control unit managing the navigation of the same vehicles through the network.

The method and the system is also based on the availability of a network central control unit, which performs the continually updated monitoring of the traffic status on the network and exchanges information in a bidirectional way with the vehicle local control unit.

The method and the system described herein have a number of advantages.

A first advantage of the method and the system is to supply a solution for the public mobility of the persons that is effectively attractive for the passengers, who today utilize the private transport means, by allowing the point to point transfer, at any required time, with optimization of the transit time, additionally making the passengers free from the engagement in the vehicle drive in favor of more productive activity and improved quality of life.

A further advantage of the method and the system is to supply a solution for the public mobility of the persons that results of easy and economic implementation and maintenance by the interested public authorities; that for example can be conveniently installed in the territory with reduced costs compared with other infrastructures for the mobility (such as subway and railway); and furthermore that has reduced maintenance costs thanks to the limited staff necessary for driving and control.

Another advantage of the method and the system is to supply a solution for the public mobility of the persons that minimizes the impact on the environment, for example by utilizing low pollution vehicle propulsion systems and the adoption of methods for the minimization of the energy and fuel consumption.

A further advantage of the method and the system is to supply a solution for the public mobility of the persons that has a high level of safety, both in the prevention of collisions and accidents, and in the prevention and reduction of failures and potentially critical situations of interruption or paralysis of the service.

Another advantage of the method and the system is to supply a solution for the public mobility of the persons that minimizes the impact on the territory, for example by reducing the width of the traffic roads dedicated to the public transport and facilitating their camouflage within the existing urban infrastructure, in order to favor the fruition of the remaining road infrastructure by the pedestrian and bicycle traffic.

Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A method for mobility in the urban and extra urban environment, the method comprising:

   - providing a road network (201, 301) distributed over the territory and combined of branches (101), that allow the aligned transit of vehicles (401), and provided with stations (104) for letting the passengers (402) get in and get out the vehicles (401), ramifications (102, 105) for the vehicle deviation to a station (104) or to another branch (101), and inlet ways (106, 502) for the vehicle entrance from a station (104) or from another branch (103);

   - providing a fleet of vehicles (401) destined to the transport of passengers (402), each equipped with a local control unit (405) allowing at least the functionality of automated navigation across the road network (201, 301);

   - providing a network central control unit (403), performing the monitoring of the traffic in the road network (201, 301) and of the status of commitment of the vehicles (401)

   **characterized in that**
   the network central control unit (403) automatically distributes the unused vehicles (401) in the stations (104) in function of the user received and foreseen reservations.

2. The method according to Claim 1,
   wherein the network central control unit (403) collects and handles the information continually updated about the traffic in each branch (101) of the network (201, 301).

3. The method according to Claim 1 or 2,
   wherein the network central control unit (403) gathers the user's reservations dispatched in a variety of means, among which internet, mobile phone, helpdesk operator, or request means available at the stations, and furthermore adopts predictive strategies based on statistic elaboration of the historical times and frequencies of use, dispatching in automatic way the unused vehicles (401) to the stations (104) in quantity sufficient for the foreseen requests.

4. The method according to any one of Claims 1 to 3, wherein the vehicle local control unit (405) performs an automated navigation across the network (201, 301), with maximization of the speed, and the automatic selection of the path with minimum time to the desired destination, based on the knowledge of the network map and the information continually updated about the traffic in each branch (101) of the network (201, 301) acquired by means of communication with the network central control unit (403).

5. The method according to any one of Claims 1 to 4, wherein the vehicle local control unit (405) automatically aligns the vehicle (401) along the network (201, 301) and prevents a collision with obstacles or other vehicles (401), by means of sensors based on electro acoustic or electromagnetic devices, and/or video images and their elaboration.

6. The method according to any one of Claims 1 to 5, wherein the vehicle local control unit (405) obtains its position and speed by means of either passive methods, among which analysis of reflected acoustic or electromagnetic signals, analysis of video images of predefined references or markers, or by means of active methods, among which the triangulation between satellite references (GPS), or between references of the mobile telephone network, or between other proprietary references in the network (201, 301), or the communication with active devices along the network (201, 301).

7. The method according to any one of Claims 1 to 6, wherein the vehicle local control unit (405) keeps a redefined safety distance from the preceding vehicle (401) during the transit in a branch (101), during the inlet of the preceding vehicle (401) in the branch (101), during the access and movement in the stations (104), by a variety of means, among which by processing and analyzing images, by analyzing acoustic or electromagnetic signals emitted from the following vehicle (401) and reflected from the preceding vehicle (401), by analyzing acoustic or electromagnetic signals emitted with appropriate frequency and coding from the preceding vehicle (401) and received from the following vehicle (401), by acquisition and processing of the position and speed of the preceding vehicle (401) obtained by radio communication with the network central control unit (403) or directly with the preceding vehicle (401), or by a combination of the same.

8. The method according to any one of Claims 1 to 7, wherein in proximity of the inlet the vehicles (401) synchronize their speed in order to maintain at least a predefined safety distance (504), with alternate priority between vehicles (401) in transit in the branch (101) and vehicles in inlet.

9. The method according to any one of Claims 1 to 8, wherein the optimal path to the preselected destination is continually recalculated by the vehicle local control unit (405), based on the updated information about the state of congestion and average speed for each branch (101) of the network (201, 301) acquired in real time by radio communication with the network central control unit (403).

10. A system for the mobility in an urban and extra-urban environment, comprising:

    - a road network (201, 301) distributed over the territory, combined of branches (101), that allow the aligned transit of the vehicles (401), and provided with stations (104) for letting the passengers (402) get in and get out the vehicles (401), ramifications (102, 105) for the vehicle deviation to a station (104) or to another branch (101), inlet ways (106, 502) for the vehicle entrance from a station (104) or from another branch (103);
    - a fleet of vehicles (401) destined to the transport of passengers (402), each equipped with a local control unit (405), which allows at least the functionality of automated navigation across the network (201, 301);
    - a network central control unit (405), performing the monitoring of the traffic in the road network (201, 301) and of the status of commitment of the vehicles (401)

    **characterized in that**
    the network central control unit (403) allows at least the functionality of automatic distribution of the unused vehicles (401) in the stations (104) in function of the user received and foreseen reservations.

11. The system according to Claim 10, wherein the road network (201, 301) is realized by a combination of one way branches (101) without intersections.

12. The system according to Claim 10 or 11, wherein the road network (201, 301) consists of one way branches (101) realized by means of reserved lanes, with width less than 2.5 meters, placed at ground, underground or elevated level, and is also provided with areas for the emergency parking.

13. The system according to any one of Claims 10 to 12, wherein the vehicle local control unit (405) allows the user to select the desired destination, by a variety of means, among which selection by a numeric or alphanumeric keyboard, localization on a video map, or vocal control.

14. The system according to any one of Claims 10 to 13, wherein the road network (201, 301), the vehicle local control unit (405) and the network central control unit (403) are arranged for performing a method according to any one of claims 2 to 9.

**Patentansprüche**

1. Verfahren für die Mobilität im städtischen und außerstädtischen Bereich, wobei das Verfahren umfasst:

    - Bereitstellen eines Straßennetzwerks (201, 301), das über das Gebiet verteilt ist und aus Zweigen (101) zusammengesetzt ist, das den abgestimmten Durchlauf von Fahrzeugen (401) gestattet und das mit Stationen (104) versehen ist, um die Passagiere (402) in die Fahrzeuge (401) einsteigen und aus den Fahrzeugen (401) aussteigen zu lassen, und mit Verzweigungen (102, 105) für die Fahrzeugablenkung zu einer Station (104) oder zu einem anderen Zweig (101), und mit Einlasswegen (106, 502) für den Eintritt eines Fahrzeugs von einer Station (104) oder von einem anderen Zweig (103);
    - Bereitstellen einer Flotte von Fahrzeugen (401), die zu dem Transport von Passagieren (402) bestimmt sind und die jeweils mit einer lokalen Steuereinheit (405) ausgestattet sind, die wenigstens die Funktionalität einer automatischen Navigation durch das Straßennetzwerk (201, 301) gestattet;
    - Bereitstellen einer zentralen Netzwerksteuereinheit (403), die den Verkehr im Straßennetzwerk (201, 301) und den Einsatzstatus der Fahrzeuge (401) überwacht,

    **dadurch gekennzeichnet, dass**
    die zentrale Netzwerksteuereinheit (403) die unbenutzten Fahrzeuge (401) in Abhängigkeit von den erhaltenen und vorhergesehenen Benutzerreservierungen automatisch auf die Stationen (104) verteilt.

2. Verfahren nach Anspruch 1,
    bei dem die zentrale Netzwerksteuereinheit (403) kontinuierlich aktualisierte Informationen über den Verkehr in jedem Zweig (101) des Netzwerks (201, 301) sammelt und bearbeitet.

3. Verfahren nach Anspruch 1 oder 2,
    bei dem die zentrale Netzwerksteuereinheit (403) die Reservierungen der Benutzer sammelt, die mit Hilfe von verschiedenen Mitteln abgegeben worden sind, unter anderem Internet, Mobiltelefonen, Mitarbeitern von Informationsschaltern oder an den Stationen verfügbaren Anforderungsmitteln, und weiterhin Vorhersagestrategien auf der Grundlage einer statistischen Verarbeitung der vergangenen Zeiten und Häufigkeiten der Benutzung anpasst und auf automatischem Wege die unbenutzten Fahrzeuge (401) in einer für die vorhergesehenen Anfragen ausreichenden Menge den Stationen (104) zuweist.

4. Verfahren nach einem der Ansprüche 1 bis 3,
    bei dem die lokale Fahrzeugsteuereinheit (405) eine automatisierte Navigation durch das Netzwerk (201, 301) ausführt, mit einer Maximierung der Geschwindigkeit und der automatischen Auswahl des Weges mit minimaler Zeit zum gewünschten Zielort auf der Grundlage der Kenntnis der Netzwerkkarte und von Informationen, die kontinuierlich über den Verkehr in jedem Zweig (101) des Netzwerks (201, 301) aktualisiert werden und die durch Kommunikation mit der zentralen Netzwerksteuereinheit (403) erhalten werden.

5. Verfahren nach einem der Ansprüche 1 bis 4,
    bei dem die lokale Fahrzeugsteuereinheit (405) das Fahrzeug (401) automatisch auf das Netzwerk (201, 301) ausrichtet und eine Kollision mit Hindernissen oder anderen Fahrzeugen (401) mit Hilfe von Sensoren auf der Grundlage von elektroakustischen oder elektromagnetischen Geräten und/oder Videobildern und deren Verarbeitung verhindert.

6. Verfahren nach einem der Ansprüche 1 bis 5,
    bei dem die lokale Fahrzeugsteuereinheit (405) ihre Position und Geschwindigkeit entweder mit Hilfe passiver Verfahren, unter anderem durch die Analyse von reflektierten akustischen oder elektromagnetischen Signalen, die Analyse von Videobildern von vorbestimmten Bezugspunkten oder Markierungen, erhält, oder mit Hilfe von aktiven Verfahren, unter anderem durch Triangulation zwischen Bezugssatelliten (GPS) oder zwischen Bezugspunkten des mobilen Telefonnetzes oder zwischen anderen eigenen Bezugspunkten im Netzwerk (201, 301) oder die Kommunikation mit aktiven Geräten entlang dem Netzwerk (201, 301).

7. Verfahren nach einem der Ansprüche 1 bis 6,
    bei dem die lokale Fahrzeugsteuereinheit (405) einen vorbestimmten Sicherheitsabstand von dem vorausfahrenden Fahrzeug (401) beim Durchfahren eines Zweiges (101), während des Einführens eines vorausfahrenden Fahrzeugs (401) in den Zweig (101), während der Zufahrt und der Bewegung in den Stationen (104), durch eine Vielzahl von Mitteln einhält, unter anderem durch Verarbeiten und Analysieren von Bildern, durch Analysieren von akustischen und elektromagnetischen Signalen, die von dem nachfolgenden Fahrzeug (401) emittiert und von dem vorausfahrenden Fahrzeug (401) reflektiert werden, durch Analysieren von akustischen oder elektromagnetischen Signalen, die mit geeigneter Frequenz und Codierung von dem vorausfahrenden Fahrzeug (401) ausgesandt und von dem nachfolgenden Fahrzeug (401) empfangen werden, durch Akquisition und Verarbeiten der Position und Geschwindigkeit des vorausfahrenden Fahrzeugs (401), die über drahtlose Kommunikation mit der zentralen Netzwerksteuereinheit (403) oder unmittelbar mit dem vorausfahrenden Fahrzeug (401) oder durch eine Kombination dergleichen erhalten worden sind.

8. Verfahren nach einem der Ansprüche 1 bis 7, bei dem die Fahrzeuge (401) in der Nähe des Einlasses ihre Geschwindigkeit synchronisieren, um zumindest einen vorbestimmten Sicherheitsabstand (504) mit abwechselnder Priorität zwischen Fahrzeugen (401) beim Durchfahren des Zweiges (101) und Fahrzeugen beim Einführen einzuhalten.

9. Verfahren nach einem der Ansprüche 1 bis 8, bei dem der optimale Weg zum vorausgewählten Bestimmungsort kontinuierlich durch die lokale Fahrzeugsteuereinheit (405) neu berechnet wird, auf der Grundlage von aktualisierten Informationen über die Staulage und die durchschnittliche Geschwindigkeit für jeden Zweig (101) des Netzwerks (201, 301), die in Echtzeit durch drahtlose Kommunikation mit der zentralen Netzwerksteuereinheit (403) erhalten werden.

10. System für die Mobilität im städtischen und außerstädtischen Bereich mit:

  - einem Straßennetzwerk (201, 301), das über das Gebiet verteilt ist, aus Zweigen (101) zusammengesetzt ist, das den abgestimmten Durchlauf von Fahrzeugen (401) zulässt und mit Stationen (104) versehen ist, um den Passagieren das Einsteigen in die Fahrzeuge (401) und das Aussteigen aus den Fahrzeugen (401) zu gestatten, mit Verzweigungen (102, 105), um Fahrzeuge zu Stationen (104) oder auf einen anderen Zweig (101) abzulenken, und mit Einlasswegen (106, 502) für den Eintritt eines Fahrzeugs von einer Station (104) oder von einem anderen Zweig (103);
  - eine Flotte von Fahrzeugen (401), die für den Transport von Passagieren (402) bestimmt sind und die jeweils mit einer lokalen Steuereinheit (405) ausgestattet sind, die wenigstens die Funktionalität einer automatischen Navigation durch das Netzwerk (201, 301) gestattet;
  - eine zentralen Netzwerksteuereinheit (405), die den Verkehr im Straßennetzwerk (201, 301) und den Einsatzstatus der Fahrzeuge (401) überwacht,

**dadurch gekennzeichnet, dass**
die zentrale Netzwerksteuereinheit (403) wenigstens die Funktionalität der automatischen Verteilung der unbenutzten Fahrzeuge (401) über die Stationen (104) in Abhängigkeit der erhaltenen und vorhergesehenen Benutzerreservierungen zulässt.

11. System nach Anspruch 10, bei dem das Straßennetzwerk (201, 301) durch eine Kombination von Einbahnzweigen (101) ohne Kreuzungen bewerkstelligt ist.

12. System nach Anspruch 10 oder 11, bei dem das Straßennetzwerk (201, 301) aus Einbahnzweigen (101) besteht, die mit Hilfe von reservierten Fahrbahnen mit einer Breite von wenigstens 2,5 Metern bewerkstelligt sind, die auf dem Boden, im Untergrund oder auf einem erhöhten Niveau angeordnet sind, und auch mit Bereichen zum Notfallparken versehen ist.

13. System nach einem der Ansprüche 10 bis 12, bei dem die lokale Fahrzeugsteuereinheit (405) dem Benutzer gestattet, den gewünschten Zielort durch eine Vielzahl von Mitteln auszuwählen, unter anderem durch eine Auswahl mit Hilfe einer numerischen oder alphanumerischen Tastatur, der Lokalisierung auf einer Videokarte oder durch Sprachsteuerung.

14. System nach einem der Ansprüche 10 bis 13, bei dem das Straßennetzwerk (201, 301), die lokale Fahrzeugsteuereinheit (405) und die zentrale Netzwerksteuereinheit (403) zum Ausführen eines Verfahrens nach einem der Ansprüche 2 bis 9 eingerichtet ist.

**Revendications**

1. Un procédé destiné à la mobilité dans l'environnement urbain et extra-urbain, le procédé comprenant :

  - la fourniture d'un réseau routier (201, 301), réparti sur le territoire et composé de branches (101), qui permet le transit aligné de véhicules (401) et qui est équipé de stations (104) destinées à laisser les passagers (402) monter et descendre des véhicules (401), des ramifications (102, 105) pour la déviation de véhicules vers une station (104) ou vers une autre branche (101) et des voies d'entrée (106, 502) pour l'entrée de véhicules provenant d'une station (104) ou d'une autre branche (103),
  - la fourniture d'une flotte de véhicules (401) destinés au transport de passagers (402), chacun d'eux étant équipé d'une unité de commande locale (405) permettant au moins la fonctionnalité de navigation automatisée sur le réseau routier (201, 301),

- la fourniture d'une unité de commande centrale de réseau (403) qui exécute la surveillance du trafic dans le réseau routier (201, 301) et de l'état d'engagement des véhicules (401),

**caractérisé en ce que**

l'unité de commande centrale de réseau (403) répartit automatiquement les véhicules non utilisés (401) dans les stations (104) en fonction des réservations prévues et reçues des utilisateurs.

**2.** Le procédé selon la Revendication 1, dans lequel l'unité de commande centrale de réseau (403) collecte et gère les informations actualisées en continu concernant le trafic dans chaque branche (101) du réseau (201, 301).

**3.** Le procédé selon la Revendication 1 ou 2, dans lequel l'unité de commande centrale de réseau (403) recueille les réservations des utilisateurs envoyées selon une variété de moyens, parmi lesquels internet, téléphone mobile, opérateur de centre d'assistance ou moyen de demande disponible dans les stations, et en outre adopte des stratégies prédictives basées sur l'élaboration de statistiques des historiques d'heures et de fréquences d'utilisation, de façon à envoyer de manière automatique les véhicules non utilisés (401) vers les stations (104) en quantité suffisante pour répondre aux demandes prévues.

**4.** Le procédé selon l'une quelconque des Revendications 1 à 3, dans lequel l'unité de commande locale de véhicules (405) exécute une navigation automatisée sur le réseau (201, 301), avec une maximisation de la vitesse, et la sélection automatique du trajet présentant la durée minimale vers la destination souhaitée, en fonction de la connaissance de la carte du réseau et des informations actualisées en continu concernant le trafic dans chaque branche (101) du réseau (201, 301) acquises au moyen d'une communication avec l'unité de commande centrale de réseau (403).

**5.** Le procédé selon l'une quelconque des Revendications 1 à 4, dans lequel l'unité de commande locale de véhicules (405) aligne automatiquement le véhicule (401) le long du réseau (201, 301) et empêche une collision avec des obstacles ou d'autres véhicules (401) au moyen de capteurs basés sur des dispositifs électromagnétiques ou électroacoustiques et/ou des images vidéo et leur élaboration.

**6.** Le procédé selon l'une quelconque des Revendications 1 à 5, dans lequel l'unité de commande locale de véhicules (405) obtient sa position et sa vitesse au moyen de soit des procédés passifs, parmi lesquels analyse de signaux électromagnétiques ou acoustiques réfléchis, analyse d'images vidéo de références ou marqueurs prédéfinis, ou au moyen de procédés actifs, parmi lesquels la triangulation entre références satellitaires (GPS) ou entre références du réseau téléphonique mobile ou entre autres références propriétaires dans le réseau (201, 301), ou la communication avec des dispositifs actifs le long du réseau (201, 301).

**7.** Le procédé selon l'une quelconque des Revendications 1 à 6, dans lequel l'unité de commande locale de véhicules (405) maintient une distance de sécurité prédéfinie à partir du véhicule qui précède (401) au cours du transit dans une branche (101), au cours de l'entrée du véhicule qui précède (401) dans la branche (101), au cours de l'accès à et du déplacement dans les stations (104), par une variété de moyens, parmi lesquels traitement et analyse d'images, analyse de signaux électromagnétiques ou acoustiques émis à partir du véhicule qui suit (401) et réfléchis à partir du véhicule qui précède (401), analyse de signaux électromagnétiques ou acoustiques émis avec un codage et une fréquence appropriés à partir du véhicule qui précède (401) et reçus du véhicule qui suit (401), acquisition et traitement de la position et de la vitesse du véhicule qui précède (401) obtenues par une communication radio avec l'unité de commande centrale de réseau (403) ou directement avec le véhicule qui précède (401), ou par une combinaison de ceux-ci.

**8.** Le procédé selon l'une quelconque des Revendications 1 à 7, où, à proximité de l'entrée, les véhicules (401) synchronisent leur vitesse afin de maintenir au moins une distance de sécurité prédéfinie (504), avec une priorité alternée entre véhicules (401) en transit dans la branche (101) avec les véhicules en entrée.

**9.** Le procédé selon l'une quelconque des Revendications 1 à 8, dans lequel le trajet optimal vers la destination présélectionnée est recalculé en continu par l'unité de commande locale de véhicules (405), en fonction des informations actualisées relatives à l'état d'encombrement et à la vitesse moyenne de chaque branche (101) du réseau (201, 301) acquises en temps réel par une communication radio avec l'unité de commande centrale de réseau (403).

**10.** Un système destiné à la mobilité dans un environnement urbain et extra-urbain, comprenant :

- un réseau routier (201, 301) réparti sur le territoire, composé de branches (101), qui permet le transit aligné des véhicules (401) et qui est équipé de stations (104) destinées à laisser les passagers (402) monter et descendre des véhicules (401), de ramifications (102, 105) pour la déviation de véhicules vers une station (104) ou vers une autre branche (101), de voies d'entrée (106, 502) pour l'entrée de véhicules provenant d'une station (104) ou d'une autre branche (103),
- une flotte de véhicules (401) destinés au transport de passagers (402), chacun des véhicules étant équipé d'une unité de commande locale (405) qui permet au moins la fonctionnalité de navigation automatisée sur le réseau (201, 301),
- une unité de commande centrale de réseau (405) exécutant la surveillance du trafic dans le réseau routier (201, 301) et de l'état d'engagement des véhicules (401),

**caractérisé en ce que**
l'unité de commande centrale de réseau (403) permet au moins la fonctionnalité de répartition automatique des véhicules non utilisés (401) dans les stations (104) en fonction des réservations prévues et reçues des utilisateurs.

11. Le système selon la Revendication 10,
dans lequel le réseau routier (201, 301) est mis en oeuvre par une combinaison de branches à sens unique (101) sans intersections.

12. Le système selon la Revendication 10 ou 11,
dans lequel le réseau routier (201, 301) se compose de branches à sens unique (101) mises en oeuvre au moyen de voies réservées, avec une largeur inférieure à 2,5 mètres, placées au niveau du sol, en souterrain ou en aérien, et qui est également équipé de zones pour un stationnement d'urgence.

13. Le système selon l'une quelconque des Revendications 10 à 12,
dans lequel l'unité de commande locale de véhicules (405) permet à l'utilisateur de sélectionner la destination souhaitée par une variété de moyens, parmi lesquels sélection au moyen d'un clavier numérique ou alphanumérique, localisation sur une carte vidéo ou commande vocale.

14. Le système selon l'une quelconque des Revendications 10 à 13,
dans lequel le réseau routier (201, 301), l'unité de commande locale de véhicules (405) et l'unité de commande centrale de réseau (403) sont agencés de façon à exécuter un procédé selon l'une quelconque des Revendications 2 à 9.

FIG 1

FIG 2

FIG 3A

FIG 3B

FIG 4

FIG 5

FIG 6

602

601

603

FIG 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4361202 A
- US 3529284 A
- US 4220946 A
- US 4972288 A
- US 5696503 A
- US 5801943 A
- US 6246956 B
- US 6577946 B
- US 7098806 B2
- US 20030128135 A1
- US 3541962 A
- US 20070189851 A1
- US 6049619 A
- WO 9959100 A1
- WO 2005098782 A1

### Non-patent literature cited in the description

- **BERTSEKAS.** *Dynamic Programming and Optimal Control,* 2007, vol. 2
- **Y. BOYKOV ; V. KOLINOGOROV.** *IEEE Transactions on Pattern Analysis and Machine Intelligence,* September 2004, vol. 26 (9), 1124-1137